Europäisches Patentamt

European Patent Office

Office européen des brevets

(19)

(11) Veröffentlichungsnummer : **0 113 853**
**B1**

(12) **EUROPÄISCHE PATENTSCHRIFT**

(45) Veröffentlichungstag der Patentschrift :
27.07.88

(21) Anmeldenummer : 83112286.6

(22) Anmeldetag : 07.12.83

(51) Int. Cl.⁴ : **B 29 C 45/52**

(54) Rückströmsperre.

(30) Priorität : 21.12.82 DE 3247272

(43) Veröffentlichungstag der Anmeldung :
25.07.84 Patentblatt 84/30

(45) Bekanntmachung des Hinweises auf die Patenterteilung : 27.07.88 Patentblatt 88/30

(84) Benannte Vertragsstaaten :
AT CH FR GB IT LI NL

(56) Entgegenhaltungen :
FR-A- 2 363 429
GB-A- 946 345

(73) Patentinhaber : Krauss-Maffei Aktiengesellschaft
Krauss-Maffei-Strasse 2
D-8000 München 50 (DE)

(72) Erfinder : Eichlseder, Martin
Ottenberg 54
D-8399 Tettenweis (DE)
Erfinder : Bürkle, Erwin, Dipl.-Ing.
Langenwalterstrasse 8
D-8174 Benediktbeuern (DE)

EP 0 113 853 B1

## Beschreibung

Die Erfindung betrifft eine Rückströmsperre nach dem Oberbegriff des Anspruchs 1 (vgl. US-PS 3 209 408). Die Abstandshalter sind auf dem Umfang verteilte Kugeln ähnlich wie bei einem Kugellager und sollen bessere Reibungsverhältnisse dadurch schaffen, daß die rotierende Schnecke nicht den Sperring in Rotation versetzt. Eine weitere Funktion der Kugeln besteht darin, daß ein gewisser Kneteffekt hinsichtlich der Kunststoffschmelze beim Durchströmen der Kugeln erreicht wird.

Trotz dieser Maßnahme bleibt die Rückströmsperre ein empfindliches, weil großen Kräften unterworfenes Bauteil, das gelegentlich ausgewechselt werden muß, und zwar außer aus Gründen eines Ersatzes durch Verschleiß auch dazu, um andere Querschnittsverhältnisse für den Durchfluß der Kunststoffschmelze zu schaffen. Bei der bekannten Rückströmsperre lassen sich auch bei aus der Zylinderwand herausgezogener Plastifizierschnecke weder die Kugeln noch der Sperring auf einfache Weise entfernen ; vielmehr muß der Schneckenkopf aus dem Plastifizierschneckenkörper herausgeschraubt werden, was nicht nur umständlich ist, sondern auch der Hilfe von Werkzeugen bedarf.

Durch die DE-AS-19 24 040 ist eine Rückströmsperre bekannt, bei der durch eine außermittige Anordnung zumindest des Konusteils der Sperring leicht herausnehmbar ist, wobei allerdings die Schnecke über die gesamte Länge des Sperrings herausgefahren werden muß, was nicht immer ohne weiteres möglich ist. Ferner tritt durch eine einseitige Anlage des Sperrings am Konusteil die Gefahr einer Verkantung und eines einseitigen Verschleißes auf. Ferner ist durch Montagemöglichkeit des Sperrings der Minimalhub begrenzt. Schließlich sind die Herstellkosten eines solchen Schneckenkopfes höher als bei den üblichen Ausführungen.

Der Erfindung liegt die Aufgabe zugrunde, eine Rückströmsperre vorzuschlagen, die eine einfachere Montage und Demontage, also auch eine schnellere Auswechslung insbesondere des Sperrings erlaubt.

Die Aufgabe wird gelöst durch die Maßnahme nach dem Kennzeichen des Anspruchs 1. Die Montage und Demontage ist dadurch leicht gemacht, daß bei nur so weit vorgezogener Plastifizierschnecke, daß die Abstandshalter freiliegen, diese mit der Hand herausnehmbar sind (oder sogar von selbst herausfallen) und danach der Sperring von Hand über den Konusteil des Schneckenkopfes herausschiebbar ist. Diese Teile können somit leicht gegen neue ersetzt oder gegen solche Teile ausgetauscht werden, die einen veränderten Durchflußquerschnitt oder einen veränderten Hub des Sperrings bewirken. Der Sperring kann auch so ausgebildet werden, daß sein Wenden um 180° veränderte Strömungsverhältnisse herbeiführt. Werkzeuge werden für diesen Austausch überhaupt nicht mehr benötigt.

Der Abstandshalter kann beispielsweise als zwei- oder mehrgeteilter Ring ausgebildet werden (Anspruch 2). Besonders vorteilhaft sind an sich bekannte Kugeln als Abstandshalter, wobei die Kugeln leicht herausnehmbar sind (Anspruch 3). Sie lassen sich leicht und besonders vielseitig verwenden, auch z. B. bei unterschiedlich großen Plastifizierschnecken, und sind im übrigen billig. Die Ansprüche 4 und 5 geben zweckmäßige Maßnahmen an, die eine statisch bestimmte Lagerung der Kugeln herbeiführen.

Die leicht herausnehmbaren Teile des Schneckenkopfes, die die wesentlichen Verschleißkörper darstellen, erlauben es ferner, den sonst fest an den Plastifizierschneckenkörper angeschraubten Schneckenkopf mit jenem einstückig herzustellen (Anspruch 6). Dadurch entfallen alle Trennflächen, ferner erhebliche Fertigungskosten. Der Sperring kann dabei sehr stabil ausgebildet werden, d.h. einen verhältnismäßig kleinen Innendurchmesser aufweisen, da es möglich ist, den mittleren Bereich des Schneckenkopfes verhältnismäßig dünn zu machen, was wiederum durch die Integration des Ringes, an den sich der Sperring dichtend anlegt, d.h. des Druckringes, ermöglicht wird. Ist nämlich dieser ein gesondertes Teil, wie in vielen Fällen, ergibt sich aus Festigkeitsgründen eine Untergrenze für den Durchmesser des mittleren Bereichs.

Die Erfindung wird anhand der Zeichnung an einem Ausführungsbeispiel erläutert. Dabei zeigt

Fig. 1 eine Rückströmsperre in einem Längsschnitt,

Fig. 2 in einer Ansicht von vorne und

Fig. 3 einen Längsschnitt einer Variante.

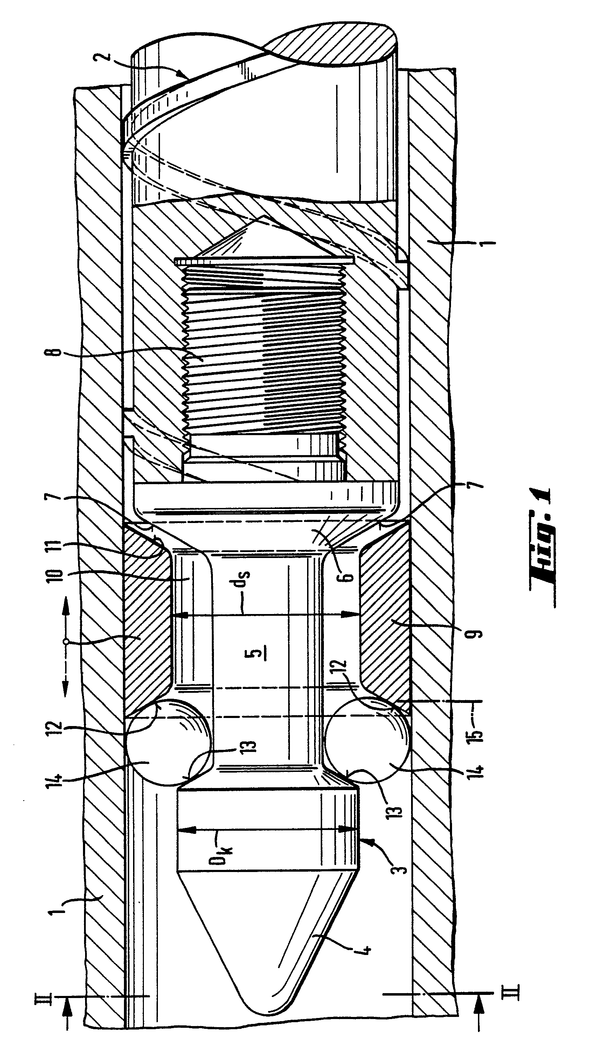

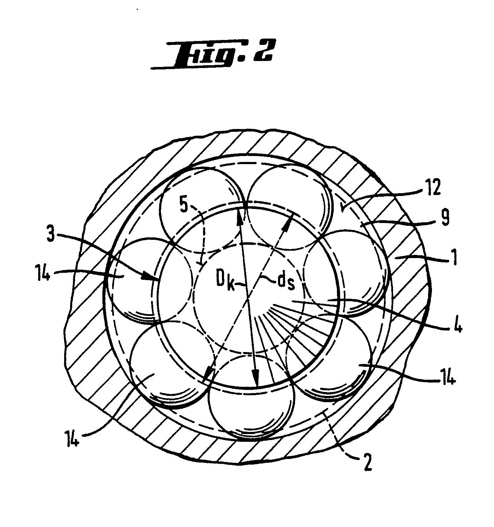

In einem Spritzzylinder 1 einer Spritzgießmaschine zur Verarbeitung von Kunststoffen ist gemäß den Fig. 1 und 2 eine Schnecke 2 zum Plastifizieren und Fördern des Kunststoffs angeordnet. Auf deren vorderem (linken) Ende ist ein Schneckenkopf 3 befestigt. Dieser besteht aus einem vorderen spitzkegeligen Abschnitt, nämlich dem Konusteil 4, einem glatten Schaft, nämlich dem mittleren Bereich 5, ferner einem Druckring 6 mit einer Anschlagfläche 7 und dem Gewindeschaft 8, der in einer Gewindebohrung in der Schnecke 2 sitzt. Radial außerhalb des mittleren Bereichs 5, mit diesem einen ringförmigen Durchflußkanal 10 für die Schmelze bildend, befindet sich ein im Spritzzylinder 1 geführter Sperring 9. Dieser weist zwei Anlageflächen 11 und 12 auf, von denen die Anlagefläche 11 in der rechten, abdichtenden Endstellung des Sperrings 9 an der Anschlagfläche 7 des Druckrings 6 anliegt. Die andere Anlagefläche 12 steht über Kugeln 14 mit einer Anlagefläche 13 als Übergang zwischen dem Konusteil 4 und dem mittleren Bereich 5 in Verbindung.

Beide Flächen sind etwa 60° zur Schneckenachse geneigt ausgebildet, wobei die Schrägstellung von der Schneckenachse aus nach vorne (links) verläuft. Die Kugeln 14, die einen Durchmesser etwa vom Abstand zwischen dem mittleren Bereich 5 und der Wand des Spritzzylinders 1 haben und auf dem Umfang sich berührend verteilt sind, liegen nicht nur an den Anlageflächen 12 und 13 sondern auch an der Wand des Spritzzylinders 1 an, sind also statisch bestimmt gelagert, so daß sich eine bestimmte Stellung des Sperrings 9 zum Konusteil 4 ergibt. Der Innendurchmesser $d_s$ des Sperrings 9 ist etwas größer als der Außendurchmesser $D_k$ des Konusteils 4.

Wird das vordere, am Spritzzylinder 1 befestigte Düsenteil mit der Ausspritzdüse (nicht gezeichnet) entfernt und die Schnecke 2 so weit nach vorne (links) vorgefahren, daß die Vorderkante des Spritzzylinders 1 sich bei 15 befindet, können zunächst die Kugeln 14 und kann danach der Sperring 9 über den Konusteil 4 herausgenommen werden, was von Hand ohne jegliche Hilfsmittel erfolgt. Ebenso leicht könnten die Kugeln 14 und der Sperring 9 ggf. mit anderen Abmessungen eingesetzt werden.

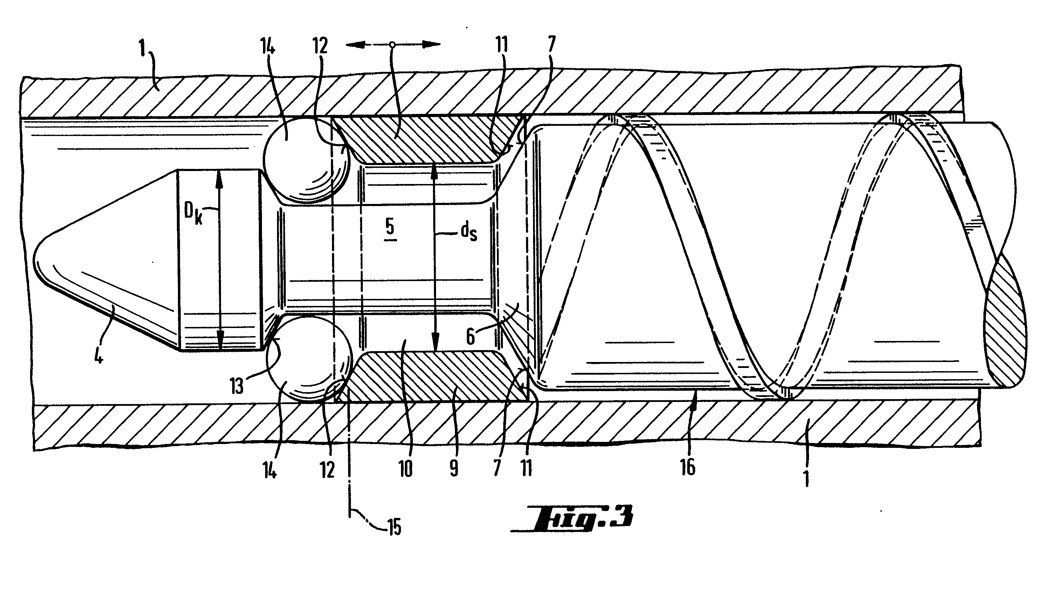

Fig. 3 unterscheidet sich von Fig. 1 darin, daß die Schnecke 2 und der gesamte Schneckenkopf 3 nach Fig. 1 zu einem einzigen Teil 16 zusammengefaßt sind.

**Patentansprüche**

1. Rückströmsperre am ausstoßseitigen Ende einer in der Wand eines Spritzzylinders (1) geführten Plastifizierschnecke (2) einer Kunststoff verarbeitenden Spritzgießmaschine mit einem vorne etwa konisch zulaufenden Schneckenkopf (3), in dessen mittlerem zylindischen, einen kleineren Durchmesser als die Basis des Konusteils (4) aufweisenden Bereich (5) ein an der Zylinderwand geführter Sperring (9) bewegbar ist, in dessen einer Endstellung ein Durchlaßspalt für die Kunststoffschmelze an den beiden stirnseitigen Anlageflächen (11, 12) des Sperrings (9) sowie zwischen diesem und dem mittleren Bereich (5) des Schneckenkopfes (3) freigelassen ist, und in dessen anderer Endstellung der Durchlaßspalt durch Anlage der hinteren stirnseitigen Anlagefläche (11) des Sperrings (9) an einer mit der Plastifizierschnecke (2) fest verbundenen Anschlagfläche (7) verschlossen ist, wobei die eine Endstellung mittels gesonderter, zwischen der vorderen stirnseitigen Anlagefläche (12) des Sperrings (9) und einer den Übergang zwischen dem mittleren zylindrischen Bereich (5) des Schneckenkopfes (3) und dessen Konusteil (4) bildenden Anlagefläche (13) angeordneter Abstandshalter (14) definiert wird, dadurch gekennzeichnet, daß die Anlageflächen (12, 13) des Sperrings (9) und des Schneckenkopfes (3) für die Abstandshalter (14) schräg bezüglich der Schneckenachse angeordnet sind und daß der Außendurchmesser ($D_k$) der Basis des Konusteils (4) des Schneckenkopfes (3) kleiner ist als der Innendurchmesser ($d_s$) des Sperrings (9).

2. Rückströmsperre nach Anspruch 1, gekennzeichnet durch einen zwei- oder mehrgeteilten Ring als Abstandshalter (14).

3. Rückströmsperre nach Anspruch 1, gekennzeichnet durch auf dem Umfang des mittleren Bereichs (5) des Schneckenkopfes (3) verteilte Kugeln als Abstandshalter (14).

4. Rückströmsperre nach Anspruch 3, dadurch gekennzeichnet, daß die Kugeln (Abstandshalter 14) außer an den Anlageflächen (12, 13) des Sperrings (9) und des Schneckenkopfes (3) auch an der Wand des Spritzzylinders (1) geführt sind.

5. Rückströmsperre nach Anspruch 4, dadurch gekennzeichnet, daß der Durchmesser der Kugeln (Abstandshalter 14) nur ein wenig kleiner ist als der Abstand zwischen der Mantelfläche des mittleren Bereichs (5) des Schneckenkopfes (3) und der Wand des Spritzzylinders (1).

6. Rückströmsperre nach einem der Ansprüche 1 bis 5, dadurch gekennzeichnet, daß der Konusteil (4), der mittlere Bereich (5) des Schneckenkopfes (3) sowie die rückwärtige Anschlagfläche (7) für den Sperring (9) einstückig mit der Plastifizierschnecke (2) ausgebildet sind (Fig. 3).

**Claims**

1. Non-return barrier at the expulsion end of a plasticising worm (2), guided in the wall of an injection cylinder (1), of a synthetic-plastics-material-processing injection-moulding machine having a forwardly approximately conically tapering worm head (3), in the middle, cylindrical region (5) of which, which has a diameter smaller than the base of the cone part (4), a barrier ring (9) guided on the cylinder wall is movable, in the one end position of which a passage gap for the synthetic plastics material melt is left free on the two end abutment faces (11, 12) of the barrier ring (9) and between the latter and the middle region (5) of the worm head (3), and in the other end position of which the passage gap is closed by abutment of the rear end abutment face (11) of the barrier ring (9) on a stop face (7) firmly connected with the plasticising worm (2), the one end position being defined by spacers (14) which are separate and arranged between the forward end abutment face (12) of the barrier ring (9) and an abutment face (13) forming the transition between the middle cylindrical region (5) of the worm head (3) and the cone part (4) of the latter, characterised in that the abutment faces (12, 13) of the barrier ring (9) and of the worm head (3), for the spacers (14), are arranged obliquely in relation to the worm axis, and in that the external diameter ($D_k$) of the base of the cone part (4) of the worm head (3) is smaller than the internal diameter ($d_s$) of the barrier ring (9).

2. Non-return barrier according to Claim 1, characterised by a two-part or multi-part ring as spacer (14).

3. Non-return barrier according to Claim 1, characterised by balls distributed on the circumference of the middle region (5) of the worm head (3) as spacers (14).

4. Non-return barrier according to Claim 3, characterised in that the balls (spacers 14) are also guided on the wall of the injection cylinder (1), as well as on the abutment faces (12, 13) of the barrier ring (9) and of the worm head (3).

5. Non-return barrier according to Claim 4, characterised in that the diameter of the balls (spacers 14) is only a little smaller than the distance between the peripheral surface of the middle region (5) of the worm head (3) and the wall of the injection cylinder (1).

6. Non-return barrier according to one of Claims 1 to 5, characterised in that the cone part (4), the middle region (5) of the worm head (3) and the rear stop face (7) for the barrier ring (9) are made in one piece with the plasticising worm (2) (Figure 3).

## Revendications

1. Dispositif antireflux à l'extrémité, côté éjection, d'une vis (2) de plastification, guidée dans la paroi d'un cylindre (1) d'injection, d'une machine de moulage par injection traitant un plastique, comportant une tête (3) de vis qui se termine vers l'avant à peu près en cône ; dans la zone cylindrique médiane (5), présentant un diamètre inférieur à celui de la base de la partie conique (4), de laquelle peut se déplacer une bague antireflux (9) guidée contre la paroi du cylindre ; dans l'une des positions d'extrémité de laquelle est laissée libre une fente de passage, pour la masse plastique fondue, près des deux surfaces frontales (11, 12) de butée de la bague antireflux (9) ainsi qu'entre cette bague et la zone médiane (5) de la tête (3) de la vis ; et dans l'autre position d'extrémité de laquelle la fente de passage est obturée du fait que la surface de butée frontale arrière (11) de la bague antireflux (9) vient buter contre une surface de butée (7) solidarisée avec la vis (2) de plastification ; étant précisé que l'une des positions d'extrémité est définie au moyen de pièces spéciales (14) de maintien de l'écartement, disposées entre la surface frontale avant (12) de butée de la bague antireflux (9) et une surface de butée (13) formant la transition entre la zone cylindrique médiane (5) de la tête (3) de la vis et sa portion conique (4), caractérisé en ce que les surfaces de butée (12, 13) de la bague antireflux (9) et de la tête (3) de vis pour les pièces (14) de maintien de l'écartement sont disposées obliquement par rapport à l'axe de la vis ; et en ce que le diamètre extérieur ($D_k$) de la base de la portion conique (4) de la tête (3) de la vis est inférieur au diamètre intérieur ($d_s$) de la bague antireflux (9).

2. Dispositif antireflux selon la revendication 1, caractérisé par une bague en deux pièces ou en plusieurs pièces servant de pièces (14) de maintien de l'écartement.

3. Dispositif antireflux selon la revendication 1, caractérisé par des billes, réparties sur la périphérie de la zone médiane (5) de la tête (3) de la vis, servant de pièces (14) de maintien de l'écartement.

4. Dispositif antireflux selon la revendication 3, caractérisé en ce que les billes (pièces 14 de maintien de l'écartement), en plus d'être guidées contre les surfaces de butée (12, 13) de la bague antireflux (9) et de la tête (3) de la vis, le sont également contre la paroi du cylindre d'injection (1).

5. Dispositif antireflux selon la revendication 4, caractérisé en ce que le diamètre des billes (pièces 14 de maintien de l'écartement) n'est que peu inférieur à la distance entre la surface latérale de la zone médiane (5) de la tête (3) de la vis et la paroi du cylindre d'injection (1).

6. Dispositif antireflux selon une des revendications 1 à 5, caractérisé en ce que la portion conique (4), la zone médiane (5) de la tête (3) de la vis, ainsi que la surface de butée arrière (7) pour la bague antireflux (9) sont réalisées d'une seule pièce avec la vis (2) de plastification (figure 3).

**Fig. 1**

0 113 853

**_Fig. 2_**

Fig.3